(19) Europäisches Patentamt
European Patent Office
Office européen des brevets

(11) Veröffentlichungsnummer: **0 050 778**
**B1**

(12) # EUROPÄISCHE PATENTSCHRIFT

(45) Veröffentlichungstag der Patentschrift: **20.06.84**

(51) Int. Cl.³: **C 07 F 9/38**

(21) Anmeldenummer: **81108193.4**

(22) Anmeldetag: **12.10.81**

(54) **Verfahren zur Herstellung von Phosphonoformaldehyd-Hydrat.**

(30) Priorität: **23.10.80 DE 3039998**

(43) Veröffentlichungstag der Anmeldung: **05.05.82 Patentblatt 82/18**

(45) Bekanntmachung des Hinweises auf die Patenterteilung: **20.06.84 Patentblatt 84/25**

(84) Benannte Vertragsstaaten: **AT BE CH DE FR GB IT LI SE**

(56) Entgegenhaltungen:
**EP - A - 0 009 348**
**EP - A - 0 027 199**
**US - A - 3 784 590**

**CHEMICAL ABSTRACTS, Band 82, 1975, Seite 421, Nr. 177140q Columbus, Ohio, U.S.A. J. WAGENKNECHT: "Electrochemical method for the preparation of iminodimethylenediphosphonic acid"**
**SITZUNGSBERICHTE DER AKADEMIE DER WISSENSCHAFT DER D.D.R., 1979, Nr. 14N, Seiten 23-31 H. GROSS: "Synthese und Anwendung von Formylphosphonsäurederivaten"**
**BULLETIN OF THE CHEMICAL SOCIETY OF JAPAN, Band 51, Nr. 7, 1978, Seiten 2169-2170 T. MORITA et al.:**

(73) Patentinhaber: **BAYER AG, Konzernverwaltung RP Patentabteilung, D-5090 Leverkusen 1 Bayerwerk (DE)**

(72) Erfinder: **Oediger, Hermann, Dr., Roggendorfstrasse 51, D-5000 Koeln 80 (DE)**
Erfinder: **Lieb, Folker, Dr., Alfred-Kubin-Strasse 1, D-5090 Leverkusen 1 (DE)**
Erfinder: **Disselnkötter, Hans, Dr., Gerstenkamp 17, D-5000 Koeln 80 (DE)**

(56) Entgegenhaltungen: (Fortsetzung)
**"The preparation of phosphonic acids having labile functional groups"**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die vorliegende Erfindung betrifft ein Verfahren zur Herstellung von Phosphonoformaldehydhydrat.

Es sind bereits Formylphosphonsäureester bekannt geworden (US-Patent Nr. 3784590). Sie sind jedoch, wie eigene Untersuchungen zeigen, sehr instabil und daher als Zwischenprodukte für technische Synthesen wenig geeignet.

Weiterhin ist die Dimethoxymethanphosphonsäure in Form des Monoaniliniumsalzes bekannt geworden („Bull. Chem. Soc. Japan", *51* [1978], 2169).

Das neue Phosphonoformaldehydhydrat der Formel I

$$(HO)_2CH-\overset{\overset{O}{\|}}{P}(OH)_2 \qquad (I)$$

entsteht, wenn man eine Dialkoxymethanphosphonsäure der Formel II

$$(RO)_2CH-\overset{\overset{O}{\|}}{P}(OH)_2 \qquad (II)$$

in welcher
R für Alkyl mit 1 bis 4 Kohlenstoffatomen steht, mit Wasser erwärmt und gegebenenfalls anschliessend mit einer Base umsetzt.

Das erfindungsgemässe Phosphonoformaldehydhydrat kann in Salze übergeführt werden.

Verwendet man beim Reaktionsablauf als Ausgangsstoff Dimethoxymethanphosphonsäure und zur Neutralisation Natronlauge, so kann der Reaktionsablauf durch folgendes Reaktionsschema wiedergegeben werden:
formule

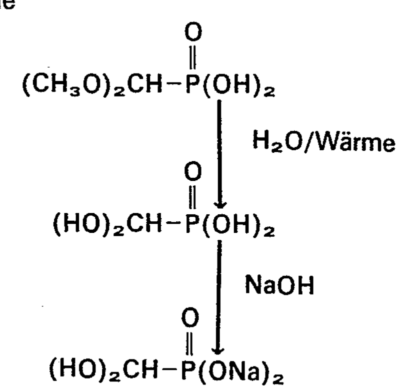


Die als Ausgangsstoffe für das erfindungsgemässe Verfahren verwendeten Dialkoxymethanphosphonsäuren sind bekannt („Bull. Chem. Soc. Japan", *51* [1978], 2169) oder können nach bekannten Verfahren hergestellt werden.

In der Formel II stehen die beiden Reste R für Alkyl mit 1 bis 4 Kohlenstoffatomen, insbesondere für Methyl und Ethyl.

Beispielsweise seien genannt: Dimethoxymethanphosphonsäure, Diethoxymethanphosphonsäure, Dipropoxymethanphosphonsäure.

Es ist nicht erforderlich, die Ausgangsprodukte als solche einzusetzen. Es genügt, die wässerigen Lösungen dieser Verbindungen, wie sie bei der Hydrolyse der entsprechenden Trimethylsilylester mit Wasser entstehen, zu verwenden.

Darüber hinaus ist es auch nicht erforderlich, die verwendeten Trimethylsilylester zu reinigen, sondern es genügt, die Trimethylsilylester, wie sie bei der Umsetzung von Dialkoxymethanphosphonsäuredialkylestern mit beispielsweise Trimethylbromsilan entstehen, ohne weitere Reinigung zu hydrolysieren. Dadurch gestaltet sich das Verfahren besonders wirtschaftlich.

Die Verbindungen der allgemeinen Formel II werden erfindungsgemäss in Wasser erwärmt.

Das Verfahren wird in einem Temperaturbereich zwischen +70 bis +100°C , vorzugsweise zwischen +80 und +90°C , durchgeführt.

Die Reaktionsdauer ist von der Temperatur und von der Struktur des Restes R abhängig und liegt zwischen 1 und 3 h.

Die erhaltene Verbindung I kann entweder durch Eindampfen der Lösung oder nach Versetzen der Lösung mit einer zur Neutralisation ausreichenden Menge einer anorganischen oder organischen Base, beispielsweise einer anorganischen Base wie Alkalihydroxid, etwa durch Versetzen mit wässeriger Natronlauge, in Form des phosphonsauren Salzes, isoliert werden. Als organische Basen eignen sich beispielsweise Pyridin oder Triethylamin.

Es ist zwar bekannt, Aldehydacetale mit starken Säuren, beispielsweise Salzsäure, Schwefelsäure oder Phosphonsäure in die freien Aldehyde zu überführen. Dazu sind beispielsweise bei aliphatischen Aldehydacetalen grössere Mengen an Säure und erhöhte Temperaturen erforderlich (Vogel, „Text-Book of Organic Chemistry", 3. Aufl., S. 323, Longmans, London).

Es ist jedoch als überraschend zu bezeichnen, dass die Acidität der Verbindungen II ausreicht, um ohne Zusatz von Fremdsäuren die Verbindung I herzustellen, die als Hydrat vorliegt und dadurch ungewöhnlich stabil ist.

Es ist ausgesprochen vorteilhaft, auf den Zusatz von Fremdsäuren verzichten zu können, da dadurch eine Isolierung des Aldehyds, beispielsweise als phosphonsäures Salz, besonders einfach ist.

Das Verfahren lässt sich als Eintopfreaktion, ausgehend vom Dialkoxymethanphosphonsäurealkylester, besonders wirtschaftlich gestalten, wenn man zur Herstellung der Ausgangsverbindung der allgemeinen Formel II die stöchiometrisch notwendige Menge an beispielsweise Trimethylbromsilan verwendet.

Das Phosphonoformaldehydhydrat ist ein Zwischenprodukt für die Herstellung von Arzneimitteln, insbesondere für die Herstellung der antiviralen Phosphonohydroxyessigsäure.

Beispielsweise reagiert das Phosphonoformaldehydhydrat I in Form seines Natriumsalzes mit Cyanwasserstoffsäure zum neuen Phosphonohydroxyacetonitril III, das durch Verseifen der Nitrilgruppe, beispielsweise mit Salzsäure, in die Phosphonohydroxyessigsäure IV überführt werden kann.

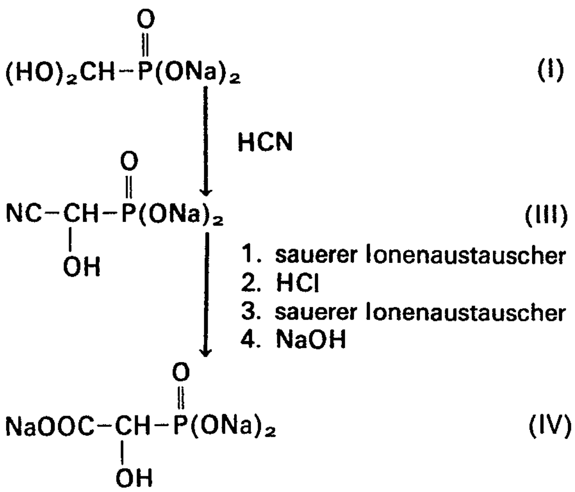


(I)

(III)

(IV)

Die Phosphonohydroxyessigsäure wirkt gegen Herpes-Viren bei Mensch und Tier, insbesondere gegen Herpes-simplex-Viren vom Typ I und II.

*Beispiel 1*

*Phosphonoformaldehyd, $Na_2$-Salz (Dihydrat)*

184 g (1 mol) Dimethoxymethanphosphonsäuredimethylester werden in 800 ml Acetonitril gelöst, bei +15 bis +20°C mit 366 g (2,4 mol) Trimethylbromsilan versetzt und anschliessend 2 h bei +40 bis +45°C gerührt. Man entfernt das Lösungsmittel und das überschüssige Trimethylbromsilan bei +30 bis +40°C im Vakuum, löst den Abdampfrückstand in 600 ml Wasser, destilliert dann bei ansteigender Temperatur bis etwa +80°C Hexamethyldisiloxan und Methanol ab, wobei das mit abdestillierende Wasser laufend ergänzt wird, und rührt anschliessend noch 1 h bei 80 bis 85°C. Man kühlt den Ansatz ab, stellt mit 3N-NaOH auf einen pH-Wert von etwa 7,5 ein, dampft im Vakuum ein und trocknet den kristallinen Rückstand im Vakuum.

Man erhält auf diese Weise 170 g (89% der Theorie) Phosphonoformaldehyd, $Na_2$-Salz (Dihydrat).

$^1H$-NMR: δ=4,9 (1H, d, J=4,0 Hz) ppm ($D_2O$)
$^{13}C$-NMR: δ=90 (d, $J_{C,P}$=180,7 Hz) ppm ($D_2O$)

Diese Verbindung kann auf folgende Weise in die Phosphonohydroxyessigsäure überführt werden:

*a) Phosphonohydroxyacetonitril, $Na_2$-Salz*

15 g (0,083 mol) Phosphonoformaldehyd, $Na_2$-Salz · $2H_2O$ werden in 30 ml $H_2O$ suspendiert und anschliessend bei etwa +25°C mit 10 ml wasserfreier Cyanwasserstoffsäure versetzt. Die Temperatur steigt auf +30°C; es entsteht eine klare Lösung. Man hält die Mischung noch 1 h bei +30°C, entfernt anschliessend die überschüssige Cyanwasserstoffsäure und das Wasser im Vakuum und trocknet den Rückstand im Vakuum.

Man erhält auf diese Weise 15 g (95% der Theorie) Phosphonohydroxyacetonitril, $Na_2$-Salz (Dihydrat).

$^1H$-NMR: δ=4,5 (1 H, d, J=16,0 Hz) ppm ($D_2O$)
$^{13}C$-NMR: δ=122,3 (C≡N); 60,2 (d, $J_{C,P}$=133,3 Hz) ppm ($D_2O$)

*b) Phosphonohydroxyessigsäure, $Na_3$-Salz*

9,5 g (0,05 mol) Phosphonohydroxyacetonitril, $Na_2$-Salz (Dihydrat) werden an einem sauren Ionenaustauscher in Phosphonohydroxyacetonitril übergeführt, in 30 ml konz. Salzsäure gelöst und über Nacht stehen gelassen. Man erwärmt noch 4 h auf 85 bis 90°C, entfernt das Lösungsmittel im Vakuum, nimmt den Abdampfrückstand in Wasser auf und filtriert die Lösung über einen sauren Ionenaustauscher. Man dampft das Filtrat im Vakuum ein, stellt die mit Wasser verdünnte Lösung auf einen pH-Wert von etwa 7,5 und entfernt das Wasser im Vakuum. Man erhält auf diese Weise 8,3 g (75% der Theorie) Phosphonohydroxyessigsäure, $Na_3$-Salz.

$^1H$-NMR: δ=4,1 (1H, d, J=18 Hz) ppm ($D_2O$)
$^{13}C$-NMR: δ=168,1 ($COO^{\ominus}$); 73,7 (d, $J_{C,P}$=134,1) ppm ($D_2O$)

*Beispiel 2*

184 g (1 mol) Dimethoxymethanphosphonsäuredimethylester werden bei +15 bis +20°C mit 306 g (2 mol) Trimethylbromsilan versetzt und anschliessend 2 h bei +40 bis +45°C gerührt. Anschliessend versetzt man bei +10 bis +20°C mit 600 ml Wasser und verfährt wie im Beispiel 1 beschrieben. Man erhält 173 g (91% der Theorie) Phosphonoformaldehyd, $Na_2$-Salz (Dihydrat).

*Beispiel 3*

12,0 g (0,05 mol) Diethoxymethanphosphonsäurediethylester werden in 40 ml Acetonitril gelöst und bei +15 bis +20°C mit 18,3 g (0,12 mol) Trimethylbromsilan versetzt und anschliessend 2 h bei +45 bis +50°C gerührt. Man verfährt dann wie im Beispiel 1 beschrieben, stellt jedoch mit 2N-LiOH auf einen pH-Wert von etwa 7,5. Man erhält auf diese Weise 6,3 g (90% der Theorie) Phosphonoformaldehyd, $Li_2$-Salz (Hydrat).

*Beispiel 4*

9,2 g (0,05 mol) Dimethoxymethanphosphonsäuredimethylester werden in 40 ml Acetonitril gelöst und bei +15 bis +20°C mit 18,3 g (0,12 mol) Trimethylbromsilan versetzt und anschliessend 2 h bei +45 bis +50°C gerührt. Man verfährt dann wie im Beispiel 1 beschrieben, versetzt jedoch mit einem Äquivalent Pyridin. Man erhält auf diese Weise 9,3 g (90% der Theorie) Phosphonoformaldehyd, Monopyridiniumsalz (Hydrat). Fp.=156 bis 158°C (Zers.).

## Patentanspruch

Verfahren zur Herstellung von Phosphonoformaldehyd der Formel (I)

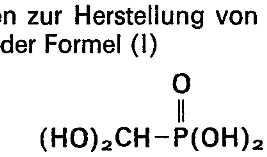

(I)

und/oder seiner Salze, dadurch gekennzeichnet, dass man eine Dialkoxymethanphosphonsäure der Formel (II)

$$(RO)_2CH-\overset{\overset{\displaystyle O}{\|}}{P}(OH)_2 \qquad (II)$$

in welcher R für Alkyl mit 1 bis 4 Kohlenstoffatomen steht, mit Wasser erwärmt und das Reaktionsprodukt gegebenenfalls anschliessend mit einer Base umsetzt.

## Claim

Process for the preparation of phosphonoformaldehyde of the formula (I)

$$(HO)_2CH-\overset{\overset{\displaystyle O}{\|}}{P}(OH)_2 \qquad (I)$$

and/or of its salts, characterised in that a dialkoxymethane-phosphonic acid of the formula (II)

$$(RO)_2CH-\overset{\overset{\displaystyle O}{\|}}{P}(OH)_2 \qquad (II)$$

in which R represents alkyl with 1 to 4 carbon atoms, is warmed with water and, if appropriate, the reaction product is then reacted with a base.

## Revendication

Procédé de production de phosphonoformaldéhyde de formule (I):

$$(HO)_2CH-\overset{\overset{\displaystyle O}{\|}}{P}(OH)_2 \qquad (I)$$

et/ou de ses sels, caractérisé en ce qu'on chauffe avec de l'eau un acide dialkoxyméthanephosphonique de formule (II):
formule

$$(RO)_2CH-\overset{\overset{\displaystyle O}{\|}}{P}(OH)_2 \qquad (II)$$

dans laquelle R est un groupe alkyle ayant 1 à 4 atomes de carbone et, le cas échéant, on fait ensuite réagir le produit réactionnel avec une base.